# EUROPEAN PATENT SPECIFICATION

(11) **EP 3 678 274 B1**
(45) Date of publication and mention of the grant of the patent: **14.10.2026**
(21) Application number: 18871360.6
(22) Date of filing: 17.10.2018
(51) Int. Cl.: H02M 7/797, H02M 7/81, H02M 3/335, H02J 3/38, H02M 7/5387, H02M 1/12, H02M 1/00

(54) **TRACTION POWER SUPPLY SYSTEM AND ENERGY FEEDBACK APPARATUS THEREFOR**
TRAKTIONSSTROMVERSORGUNGSSYSTEM UND ENERGIERÜCKKOPPLUNGSVORRICHTUNG DAFÜR
SYSTÈME D'ALIMENTATION EN PUISSANCE DE TRACTION ET APPAREIL DE RÉTROACTION D'ÉNERGIE ASSOCIÉ

(30) Priority: 23.10.2017 CN 201710993557
(43) Date of publication of application: 08.07.2020
(73) Proprietor: CRRC Zhuzhou Electric Locomotive Research Institute Co., Ltd., Zhuzhou, Hunan 412001 (CN)
(72) Inventor: ZHANG, Zhixue, Zhuzhou, Hunan 412001 (CN); CHEN, Tao, Zhuzhou, Hunan 412001 (CN); CHEN, Jiang, Zhuzhou, Hunan 412001 (CN); LIU, Huadong, Zhuzhou, Hunan 412001 (CN); HUANG, Zihao, Zhuzhou, Hunan 412001 (CN); LI, Hongbo, Zhuzhou, Hunan 412001 (CN)
(74) Representative: Lorenz Seidler Gossel Part. mbB
(86) International application number: PCT/CN2018/110604
(87) International publication number: WO 2019/080756

(56) References cited:
- EP-A1- 1 350 666
- CN-A- 102 774 294
- CN-A- 106 026 185
- CN-A- 107 124 009
- CN-A- 107 124 009
- CN-U- 203 278 664
- CN-U- 205 051 584
- CN-U- 206 317 824
- US-A1- 2009 021 081

## Description

### FIELD

The present disclosure relates to the technical field of traction power supply, and in particular to a traction power supply system and an energy feedback device of the traction power supply system.

### BACKGROUND

With improvement of the power system technology of rail vehicles such as subways, the energy feedback technology is developed. During a process that a train runs, a traction power supply system supplies power to the train normally. During a process that the train is braked, an energy feedback device of the traction power supply system is started to feed back electric energy generated due to the braking to a power grid, thereby achieving energy saving.

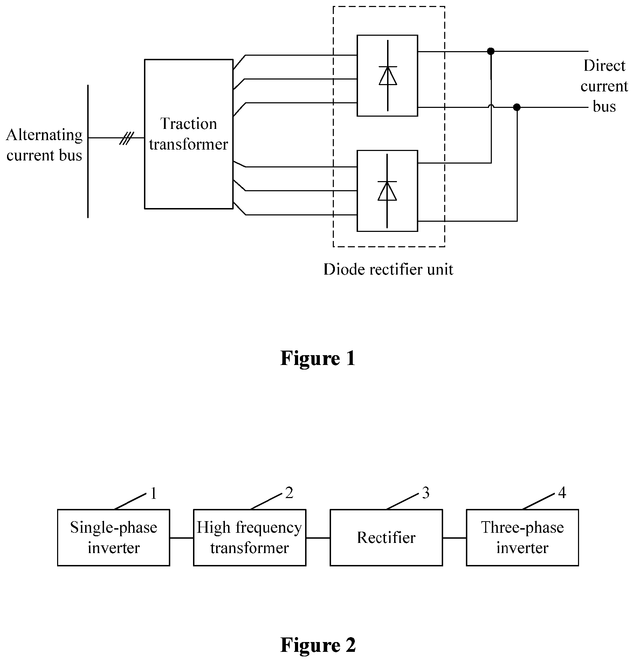

The traction power supply system of the train generally supplies power to the train through a traction transformer and a diode rectifier unit. As shown in Figure 1, a primary side of a traction transformer is connected to an alternating current bus, that is, is connected to an alternating current power grid. A secondary side of the traction transformer is connected to an input end of a diode rectifier unit. An output end of the diode rectifier unit is connected to a direct current bus and serves as an output end of the traction power supply system to supply the power to the train.

In the conventional technology, the energy feedback device is generally formed by adding an inverter and an industrial frequency transformer to the structure shown Figure 1. The inverter is used to invert direct current power in the direct current bus into alternating current power during the process that the train is braked. The industrial frequency transformer is used to feed back the alternating current power to the primary side or the secondary side of the traction transformer. Then, the alternating current power is further fed back to the alternating current power grid. Since the industrial frequency transformer is bulky and cumbersome, the industrial frequency transformer is not easily installed, causing a great difficulty in construction design of the rail vehicles. Another energy feedback device exists in the conventional technology, in which an inverter is connected in parallel to the diode rectifier unit and the original traction transformer is used to feed back the inverted alternating current to the power grid. A circulating current may be generated in a loop formed by the energy feedback device and the diode rectifier unit during the operation of the energy feedback device, reducing energy utilization efficiency of the traction power supply system.

It can be seen that, a technical problem to be solved by those skilled in the art is to provide an energy feedback device by which the energy utilization efficiency can be improved and the installation can be facilitated.

CN 107124009 A discloses an inverter-type metro regenerated energy feedback device, including a DC switch module, a high-frequency DC/DC module and an inverter cabinet module, which are connected in sequence. The DC switch module is connected to a DC bus of a substation; two paths of an AC output of the inverter cabinet module are connected to two low-voltage windings of a rectifier respectively; the high-frequency DC/DC module is a full-bridge DC/DC conversion circuit; and the inverter cabinet module is a three-phase PWM bridge circuit.

EP 1350666 A1 relates to a suspended line, which is supplied by a transformer and a diode rectifier connected in series. The anode of a further diode is connected to the line, and its cathode is connected to the intermediate circuit of an inverter. Nominal power of the inverter is less than one half, preferably less than a quarter, that of the diode rectifier. Energy is transferred from the line to the alternating current supply grid.

CN 205051584 U discloses a three-phase to single-phase transform device of no frequency transformer, the device adopt three-phase to single-phase converter multimode cascade structure to bear the three-phase grid high pressure, and the output cancellation frequency transformer that establishes ties after the three-phase cascades is direct continuous with single-phase supply network, has improved the output voltage grade. Single-phase converter mainly includes rectifier circuit, two-way DC-DC transfer circuit and inverter circuit.

CN 106026185 A discloses a three-level subway energy feedback and harmonic control integrated device and a control method thereof. The integrated device includes an integrated power converter and a control system which are sequentially connected, the direct current side of the integrated power converter is hung between a positive busbar and a negative busbar of a direct current contact network in a subway supply network, and the alternating current side of the integrated power converter includes three phases which are connected to low voltage side three phase lines of a rectifier transformer of an alternating current network in the subway supply network.

### SUMMARY

The invention refers to an energy feedback device of a traction power supply system according to claim 1. Preferred embodiments are defined in the dependent claims.

An object of the present disclosure is to provide a traction power supply system and an energy feedback device of the traction power supply system, to effectively improve energy utilization efficiency and facilitate installation.

In order to solve the above technical problem, an energy feedback device of a traction power supply system is provided in the present disclosure. The energy feedback device includes a single-phase inverter, a high frequency transformer, a rectifier, and a three-phase inverter, where
an input end of the single-phase inverter is connected to a direct current bus of the traction power supply system, an output end of the single-phase inverter is connected to a primary side of the high frequency transformer, ;
a secondary side of the high frequency transformer is connected to an input end of the rectifier, and the high frequency transformer is configured to transform a received signal and output the transformed signal;
an output end of the rectifier is connected to an input end of the three-phase inverter, and the rectifier is configured to rectify a received signal and output the rectified signal; and
an output end of the three-phase inverter is connected to a secondary side of a traction transformer of the traction power supply system, and the three-phase inverter is configured to invert a received signal into a three-phase alternating current signal and output the three-phase alternating current signal to achieve energy feedback;
wherein the single-phase inverter is configured to: in a case that the direct current bus voltage is higher than the preset voltage threshold and a direct current bus current is higher than a preset current threshold, invert the direct current power in the direct current bus into the single-phase alternating current power and output the single-phase alternating current power. Specifically, multiple sets each including the single-phase inverter, the high frequency transformer and the rectifier are connected in parallel between the direct current bus and the input end of the three-phase inverter.

Specifically, the single-phase inverter is a single-phase three-level inverter.

Specifically, the rectifier is a bridge rectifier.

Specifically, the energy feedback device further includes an LLC resonant circuit, where an input end of the LLC resonant circuit is connected to the secondary side of the high frequency transformer, and an output end of the LLC resonant circuit is connected to the input end of the rectifier.

Specifically, the three-phase inverter is a three-phase three-level inverter.

A traction power supply system is further provided in the present disclosure. The traction power supply system includes the energy feedback device of a traction power supply system described above.

The energy feedback device of a traction power supply system provided in the present disclosure includes a single-phase inverter, a high frequency transformer, a rectifier, and a three-phase inverter. An input end of the single-phase inverter is connected to a direct current bus of the traction power supply system, and an output end of the single-phase inverter is connected to a primary side of the high frequency transformer. The single-phase inverter is configured to: in a case that a direct current bus voltage is higher than a preset voltage threshold, invert direct current power in the direct current bus into single-phase alternating current power and output the single-phase alternating current power. A secondary side of the high frequency transformer is connected to an input end of the rectifier. The high frequency transformer is configured to transform a received signal and output the transformed signal. An output end of the rectifier is connected to an input end of the three-phase inverter. The rectifier is configured to rectify a received signal and output the rectified signal. An output end of the three-phase inverter is connected to a secondary side of a traction transformer of the traction power supply system. The three-phase inverter is configured to invert a received signal into a three-phase alternating current signal and output the three-phase alternating current signal to achieve energy feedback.

It can be seen that, in the energy feedback device of a traction power supply system provided in the present disclosure, the installation of the energy feedback device is greatly facilitated through a lightweight and miniaturized high frequency transformer, compared with the conventional technology. Further, a circulating current in the diode rectifier unit can be prevented due to the isolation function of the high frequency transformer, thereby avoiding energy wasting. It can be seen that, with the energy feedback device of a traction power supply system provided in the present disclosure, not only the installation is facilitated, but also energy utilization efficiency can be effectively improved. The traction power supply system including the energy feedback device described above provided in the present disclosure also has the above beneficial effects.

### BRIEF DESCRIPTION OF THE DRAWINGS

In order to more clearly illustrate technical solutions in the conventional technology and in embodiments of the present disclosure, the drawings to be used in the description of the conventional technology or the embodiments are briefly described below. Apparently, the drawings in the following description show only some embodiments of the present disclosure, and other drawings may be obtained by those skilled in the art from the drawings without any creative work. The obtained other drawings are also within the protection scope of the present disclosure.
Figure 1 is a schematic circuit diagram of a portion of a traction power supply system for normally supplying power to a train;
Figure 2 is a structural block diagram of an energy feedback device of a traction power supply system according to an embodiment of the present disclosure;
Figure 3 is a structural circuit diagram of a single-phase three-level inverter according to an embodiment of the present disclosure;
Figure 4 is a structural circuit diagram of a rectifier with an LLC resonant circuit according to an embodiment of the present disclosure;
Figure 5 is a structural circuit diagram of a three-phase three-level inverter according to an embodiment of the present disclosure; and
Figure 6 is a schematic circuit diagram of a traction power supply system according to an embodiment of the present disclosure.

### DETAILED DESCRIPTION OF EMBODIMENTS

The core of the present disclosure is to provide a traction power supply system and an energy feedback device of the traction power supply system, to effectively improve energy utilization efficiency and facilitate installation.

The technical solutions in the embodiments of the present disclosure are described clearly and completely in conjunction with the drawings in the embodiments of the present disclosure hereinafter. It is apparent that the described embodiments are only some embodiments of the present disclosure, rather than all embodiments. All other embodiments obtained by those skilled in the art based on the embodiments of the present disclosure without any creative work fall within the protection scope of the present disclosure.

Reference is made to Figure 2, which is a structural block diagram of an energy feedback device of a traction power supply system according to an embodiment of the present disclosure. The energy feedback device includes a single-phase inverter 1, a high frequency transformer 2, a rectifier 3, and a three-phase inverter 4.

An input end of the single-phase inverter 1 is connected to a direct current bus of the traction power supply system, and an output end of the single-phase inverter 1 is connected to a primary side of the high frequency transformer 2. The single-phase inverter is configured to: in a case that a direct current bus voltage is higher than a preset voltage threshold, invert direct current power in the direct current bus into single-phase alternating current power and output the single-phase alternating current power. A secondary side of the high frequency transformer 2 is connected to an input end of the rectifier 3. The high frequency transformer is configured to transform a received signal and output the transformed signal. An output end of the rectifier 3 is connected to an input end of the three-phase inverter 4. The rectifier is configured to rectify a received signal and output the rectified signal. An output end of the three-phase inverter 4 is connected to a secondary side of a traction transformer of the traction power supply system. The three-phase inverter is configured to invert a received signal into a three-phase alternating current signal and output the three-phase alternating current signal to achieve energy feedback.

Specifically, if it is detected that the direct current bus voltage is higher than the preset voltage threshold, it is indicated that the train is in a braking state. The electric energy generated due to the braking is accumulated, so that the direct current bus voltage is raised. In this case, the energy feedback device may be started to feedback the direct current power in the direct current bus to an alternating current bus. The preset voltage threshold herein may be set by those skilled in the art according to actual situations, which is not limited in the embodiment of the present disclosure.

In the operation of the energy feedback device, the single-phase inverter 1 firstly inverts the direct current power in the direct current bus to generate single-phase alternating current power. Then, the high frequency transformer 2 delivers the electric energy in the form of high frequency alternating current power to the rectifier 3 while achieving high frequency isolation. Next, the rectifier 3 generates direct current power and delivers the generated direct current power to the three-phase inverter 4. The three-phase inverter 4 generates three-phase industrial frequency alternating current power and delivers the generated three-phase industrial frequency alternating current power to the secondary side of the traction transformer. The traction transformer feeds back the electric energy to the alternating current bus.

The high frequency transformer 2 is implemented by a transformer with a high operating frequency, and has advantages of a small size and a light weight compared with an industrial frequency transformer. In fact, the high frequency technology attracts more and more attention in the field of power electronics. Increasing of a switching frequency facilitates miniaturization and lightweight of a device, providing convenience for installation and use of the device. In order to cooperate with the high frequency transformer 2, both the single-phase inverter 1 and the rectifier 3 herein also operate in a high frequency band. Specific circuit structures of the single-phase inverter 1 and the rectifier 3 may be selected by those skilled in the art, which is not limited in the embodiment of the present disclosure.

It can be seen that, in the energy feedback device of a traction power supply system according to the embodiment of the present disclosure, the installation of the energy feedback device is greatly facilitated through the high frequency transformer 2 having a small size. Further, a circulating current in the diode rectifier unit can be prevented due to the isolation function of the high frequency transformer 2, thereby avoiding energy wasting. It can be seen that, with the energy feedback device of a traction power supply system provided in the present disclosure, not only the installation is facilitated, but also energy utilization efficiency can be effectively improved.

Based on the above embodiment, the single-phase inverter 1 in the energy feedback device of a traction power supply system is configured to: in a case that the direct current bus voltage is higher than the preset voltage threshold and a direct current bus current is higher than a preset current threshold, invert the direct current power in the direct current bus into the single-phase alternating current power and output the single-phase alternating current power.

Specifically, after the energy feedback device is started for a time period, the direct current bus current is decreased to a quite small value when the energy feedback is substantially completed. When the direct current bus current is small to a certain extent, the process of energy feedback may be stopped. Therefore, a condition of starting the energy feedback device in the present disclosure includes a condition of "the direct current bus current being higher than the preset current threshold", in addition to the condition of "the direct current bus voltage being higher than the preset voltage threshold". That is, the energy feedback device is started only in a case that the above conditions are met. The energy feedback device may be started by controlling a switching transistor. The energy feedback device may also be started in other manners, which is not limited in the embodiment of the present disclosure.

As a preferred embodiment, multiple sets of single-phase inverters 1, high frequency transformers 2 and rectifiers 3 are connected in parallel between the direct current bus and the input end of the three-phase inverter 4.

Specifically, since the operating power of a single set of the single-phase inverter 1, the high frequency transformer 2 and the rectifier 3 is limited, and alternating current bus voltages used in different regions are not necessarily the same, multiple sets of single-phase inverters 1, high frequency transformer 2 and rectifiers 3 may be provided in parallel to each other, to together feedback the direct current power in the direct current bus, so as to improve the delivering power of the energy feedback device. Further, the single-phase inverter 1, the high frequency transformer 2 and the rectifier 3 in a same set may be packaged in a module, to facilitate the installation and use. The number of the module is set by those skilled in the art according to actual use situations.

As a preferred embodiment, the single-phase inverter is implemented by a single-phase three-level inverter.

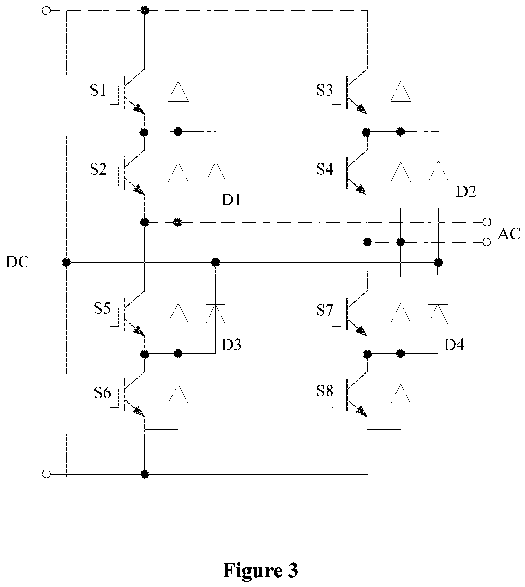

Reference is made to Figure 3, which is a structural circuit diagram of a single-phase three-level inverter according to an embodiment of the present disclosure.

The three-level inverter is implemented in a neutral point clamped (NPC) topology structure to invert the inputted DC power to AC power. In the single-phase three-level inverter shown in Figure 3, switching transistors S1, S2, S5 and S6 are connected in series with each other. D1 and D3 are a pair of clamping diodes arranged at a neutral point in the three-level inverter. Similarly, switching transistors S3, S4, S7 and S8 are connected in series with each other, and D2 and D4 are a pair of clamping diodes arranged at the neutral point.

Compared with a conventional two-level inverter, the three-level inverter as the simplest and most practical circuit among multi-level inverters mainly has the following advantages. The three-level inverter has forward voltage blocking capability twice as high as that of the two-level inverter, and the harmonic wave and the switching frequency can be reduced with the three-level inverter, thereby reducing system loss and further improving the energy utilization efficiency in the energy feedback process.

As a preferred embodiment, the rectifier is implemented by a bridge rectifier.

The bridge rectifier is a widely used rectifying circuit. The rectifier herein may also be implemented by other rectifying circuits such as a half-wave rectifying circuit, which is not limited in the present disclosure.

As a preferred embodiment, the energy feedback device further includes an LLC resonant circuit. An input end of the LLC resonant circuit is connected to the secondary side of the high frequency transformer, and an output end of the LLC resonant circuit is connected to the input end of the rectifier.

The LLC resonant circuit is composed of an inductor, a magnetic excitation inductor, and a capacitor connected in series with each other. By utilizing the resonance of the LLC resonant circuit, a switching device in the circuit may be turned on at a zero voltage and turned off at a zero current to achieve soft switching, thereby reducing the loss of the switching device and further improving the energy utilization efficiency.

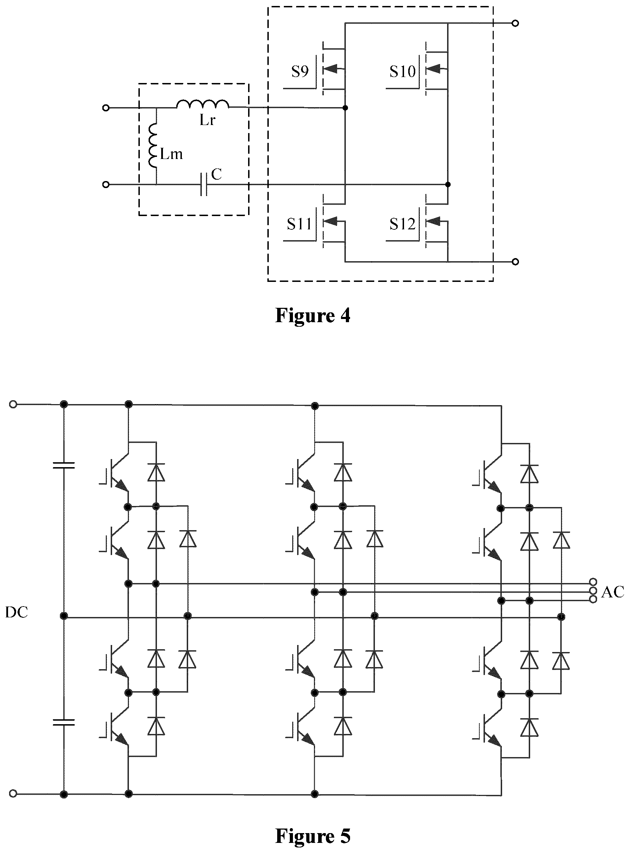

Reference is made to Figure 4, which is a structural circuit diagram of a bridge rectifier with an LLC resonant circuit according to an embodiment of the present disclosure. A magnetic excitation inductor Lm is used for mutual inductance with the high frequency transformer to excite the high frequency transformer. The magnetic excitation inductor Lm forms resonance together with an inductor Lr and a capacitor C. The magnetic excitation inductor Lm, the inductor Lr and the capacitor C constitute an LLC resonant circuit. Switching transistors S9, S10, S11 and S12 constitute a bridge rectifier. A diode may be connected in parallel with each switching transistor to provide protection, or a capacitor may be connected in parallel with the output end of the bridge rectifier to suppress a ripple of output of the rectifier, which is not limited in the embodiment of the present disclosure.

As a preferred embodiment, the three-phase inverter is implemented by a three-phase three-level inverter.

Reference is made to Figure 5, which is a structural circuit diagram of a three-phase three-level inverter according to an embodiment of the present disclosure. A structure and an operation principle of the three-phase three-level inverter are similar to those of the single-phase three-level inverter, which are not described in detail herein. The three-phase three-level inverter differs from the single-phase three-level inverter only in that three sets of switching transistors connected in series with each other and three sets of corresponding diodes are used in the three-phase three-level inverter, by which the DC power can be inverted to output three-phase AC power.

A traction power supply system is further provided in the present disclosure. The traction power supply system includes the energy feedback device of a traction power supply system according to any one of the above embodiments.

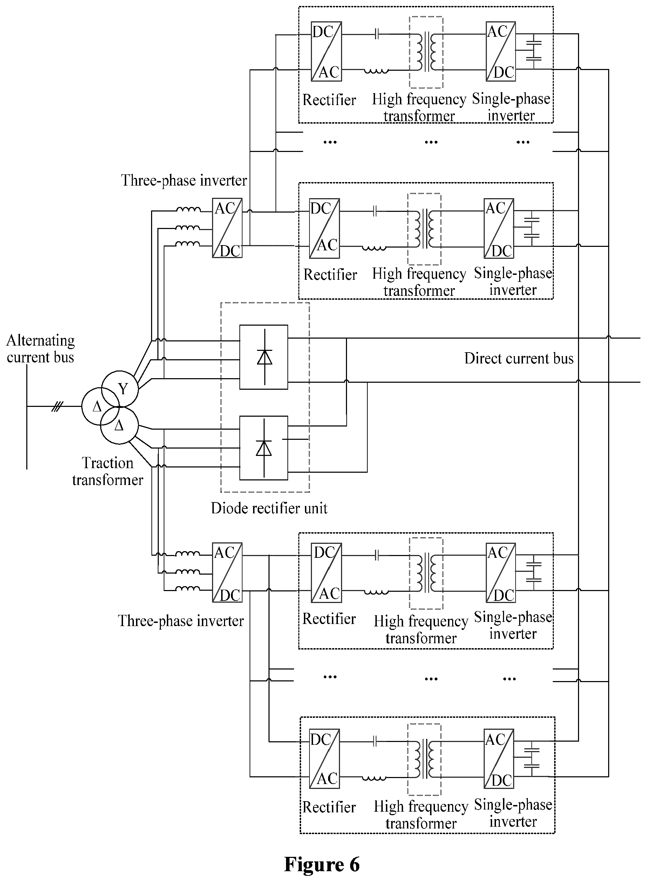

Reference is made to Figure 6, which is a schematic circuit diagram of a traction power supply system according to an embodiment of the present disclosure.

As shown in Figure 6, during a process that a train runs normally, alternating current power in an alternating current bus may be processed by a traction transformer and a diode rectifier unit in the traction power supply system to generate direct current power. The generated direct current power is delivered to a direct current bus. The traction transformer in Figure 6 is specifically implemented by a 12-pulse rectifier transformer, including two types of transformers having different connection manners, i.e., a △/Y type transformer and a △/△ type transformer. The 12-pulse rectifier transformer and the diode rectifier unit form a multi-pulse diode rectifying system. Further, those skilled in the art may select a complicated rectifier transformer such as an 18-pulse rectifier transformer or a 24-pulse rectifier transformer as the traction transformer according to actual use situations, which is not limited in the embodiment of the present disclosure. A starting current when the train is started is large, which generally is several times an operation current in the normal running. Therefore, the high current starting process of the train can be achieved with the multi-pulse diode rectifying system having strong overload capability.

An energy feedback device consisting of single-phase inverters, high frequency transformers, rectifiers and a three-phase inverter is connected in parallel to the diode rectifier unit. In Figure 6, the single-phase inverter, the high frequency transformer and the rectifier are packaged in a module, and multiple modules obtained by a packing process are connected in parallel to each other. In a process that the train is braked, the direct current power in the direct current bus is fed back to the secondary side of the traction transformer through the energy feedback device, and is fed back to the alternating current bus through the traction transformer.

It can be seen that, the traction power supply system according to the embodiment of the present disclosure is implemented by a conventional low-loss power supply system formed by the traction transformer and the diode rectifier unit in the train, avoiding large reconstruction. Further, an energy feedback device using a high frequency transformer is provided in the present disclosure. Due to the lightweight and miniaturization of the high frequency transformer, the installation of the device is facilitated, and a circulating current between the energy feedback device and the diode rectifier unit can be prevented, thereby further improving the energy utilization efficiency.

## Claims

1. An energy feedback device of a traction power supply system, the energy feedback device comprising: a single-phase inverter (1), a high frequency transformer (2), a rectifier (3) and a three-phase inverter (4), wherein
an input end of the single-phase inverter (1) is connected to a direct current bus of the traction power supply system, an output end of the single-phase inverter (1) is connected to a primary side of the high frequency transformer (2);
a secondary side of the high frequency transformer (2) is connected to an input end of the rectifier (3), and the high frequency transformer (2) is configured to transform a received signal and output the transformed signal;
an output end of the rectifier (3) is connected to an input end of the three-phase inverter (4), and the rectifier (3) is configured to rectify a received signal and output the rectified signal; and
an output end of the three-phase inverter (4) is connected to a secondary side of a traction transformer of the traction power supply system, and the three-phase inverter (4) is configured to invert a received signal into a three-phase alternating current signal and output the three-phase alternating current signal to achieve energy feedback,
**characterized in that** the single-phase inverter is configured to: in a case that the direct current bus voltage is higher than a preset voltage threshold and a direct current bus current is higher than a preset current threshold, invert the direct current power in the direct current bus into the single-phase alternating current power and output the single-phase alternating current power.

2. The energy feedback device according to claim 1, wherein a plurality of sets each comprising the single-phase inverter (1), the high frequency transformer (2) and the rectifier (3) are connected in parallel between the direct current bus and the input end of the three-phase inverter (4).

3. The energy feedback device according to any one of claims 1 to 2, wherein the single-phase inverter (1) is a single-phase three-level inverter.

4. The energy feedback device according to claim 3, wherein the rectifier (3) is a bridge rectifier.

5. The energy feedback device according to claim 4, further comprising:
an LLC resonant circuit, wherein an input end of the LLC resonant circuit is connected to the secondary side of the high frequency transformer (2), and an output end of the LLC resonant circuit is connected to the input end of the rectifier (3).

6. The energy feedback device according to claim 5, wherein the three-phase inverter (4) is a three-phase three-level inverter.

7. A traction power supply system, comprising the energy feedback device of a traction power supply system according to any one of claims 1 to 6.

## Patentansprüche

1. Energierückspeisevorrichtung eines Bahnstromversorgungssystems, wobei die Energierückspeisevorrichtung umfasst: einen Einphasen-Wechselrichter (1), einen Hochfrequenztransformator (2), einen Gleichrichter (3) und einen Dreiphasen-Wechselrichter (4), wobei
ein Eingangsende des Einphasen-Wechselrichters (1) mit einem Gleichstrom-Bus des Bahnstromversorgungssystems verbunden ist, ein Ausgangsende des Einphasen-Wechselrichters (1) mit einer Primärseite des Hochfrequenztransformators (2) verbunden ist;
eine Sekundärseite des Hochfrequenztransformators (2) mit einem Eingangsende des Gleichrichters (3) verbunden ist, und der Hochfrequenztransformator (2) dazu ausgebildet ist, ein empfangenes Signal umzuwandeln und das umgewandelte Signal auszugeben;
ein Ausgangsende des Gleichrichters (3) mit einem Eingangsende des Dreiphasen-Wechselrichters (4) verbunden ist, und der Gleichrichter (3) dazu ausgebildet ist, ein empfangenes Signal gleichzurichten und das gleichgerichtete Signal auszugeben; und
ein Ausgangsende des Dreiphasen-Wechselrichters (4) mit einer Sekundärseite eines Traktionstransformators des Bahnstromversorgungssystems verbunden ist, und der Dreiphasen-Wechselrichter (4) dazu ausgebildet ist, ein empfangenes Signal in ein dreiphasiges Wechselstromsignal umzurichten und das dreiphasige Wechselstromsignal auszugeben, um eine Energierückspeisung zu erreichen,
**dadurch gekennzeichnet, dass** der Einphasen-Wechselrichter dazu ausgebildet ist: falls die Gleichstrom-Busspannung höher als ein voreingestellter Spannungsschwellenwert ist und ein Gleichstrom-Busstrom höher als ein voreingestellter Stromschwellenwert ist, die Gleichstromleistung in dem Gleichstrom-Bus in die einphasige Wechselstromleistung umzurichten und die einphasige Wechselstromleistung auszugeben.

2. Energierückspeisevorrichtung nach Anspruch 1, wobei eine Vielzahl von Sätzen, die jeweils den Einphasen-Wechselrichter (1), den Hochfrequenztransformator (2) und den Gleichrichter (3) umfassen, zwischen dem Gleichstrom-Bus und dem Eingangsende des Dreiphasen-Wechselrichters (4) parallel geschaltet sind.

3. Energierückspeisevorrichtung nach einem der Ansprüche 1 bis 2, wobei der Einphasen-Wechselrichter (1) ein einphasiger Dreipegel-Wechselrichter ist.

4. Energierückspeisevorrichtung nach Anspruch 3, wobei der Gleichrichter (3) ein Brückengleichrichter ist.

5. Energierückspeisevorrichtung nach Anspruch 4, ferner umfassend:
einen LLC-Resonanzkreis, wobei ein Eingangsende des LLC-Resonanzkreises mit der Sekundärseite des Hochfrequenztransformators (2) verbunden ist und ein Ausgangsende des LLC-Resonanzkreises mit dem Eingangsende des Gleichrichters (3) verbunden ist.

6. Energierückspeisevorrichtung nach Anspruch 5, wobei der Dreiphasen-Wechselrichter (4) ein dreiphasiger Dreipegel-Wechselrichter ist.

7. Bahnstromversorgungssystem, umfassend die Energierückspeisevorrichtung eines Bahnstromversorgungssystems nach einem der Ansprüche 1 bis 6.

## Revendications

1. Dispositif de renvoi d'énergie d'un système d'alimentation électrique de traction, le dispositif de renvoi d'énergie comprenant : un onduleur monophasé (1), un transformateur haute fréquence (2), un redresseur (3) et un onduleur triphasé (4), dans lequel
une extrémité d'entrée de l'onduleur monophasé (1) est connectée à un bus de courant continu du système d'alimentation électrique de traction, une extrémité de sortie de l'onduleur monophasé (1) est connectée à un côté primaire du transformateur haute fréquence (2) ;
un côté secondaire du transformateur haute fréquence (2) est connecté à une extrémité d'entrée du redresseur (3), et le transformateur haute fréquence (2) est configuré pour transformer un signal reçu et délivrer en sortie le signal transformé ;
une extrémité de sortie du redresseur (3) est connectée à une extrémité d'entrée de l'onduleur triphasé (4), et le redresseur (3) est configuré pour redresser un signal reçu et délivrer en sortie le signal redressé ; et
une extrémité de sortie du redresseur (3) est connectée à une extrémité d'entrée de l'onduleur triphasé (4), et le redresseur (3) est configuré pour redresser un signal reçu et délivrer en sortie le signal redressé ; et
une extrémité de sortie de l'onduleur triphasé (4) est connectée à un côté secondaire d'un transformateur de traction du système d'alimentation électrique de traction, et l'onduleur triphasé (4) est configuré pour convertir un signal reçu en un signal de courant alternatif triphasé et délivrer en sortie le signal de courant alternatif triphasé pour réaliser un renvoi d'énergie,
**caractérisé en ce que** l'onduleur monophasé est configuré pour : dans un cas où la tension du bus de courant continu est supérieure à un seuil de tension prédéfini et un courant du bus de courant continu est supérieur à un seuil de courant prédéfini, convertir la puissance en courant continu dans le bus de courant continu en la puissance en courant alternatif monophasé et délivrer en sortie la puissance en courant alternatif monophasé.

2. Dispositif de renvoi d'énergie selon la revendication 1, dans lequel une pluralité d'ensembles comprenant chacun l'onduleur monophasé (1), le transformateur haute fréquence (2) et le redresseur (3) sont connectés en parallèle entre le bus de courant continu et l'extrémité d'entrée de l'onduleur triphasé (4).

3. Dispositif de renvoi d'énergie selon l'une quelconque des revendications 1 à 2, dans lequel l'onduleur monophasé (1) est un onduleur monophasé à trois niveaux.

4. Dispositif de renvoi d'énergie selon la revendication 3, dans lequel le redresseur (3) est un redresseur en pont.

5. Dispositif de renvoi d'énergie selon la revendication 4, comprenant en outre :un circuit résonant LLC, dans lequel une extrémité d'entrée du circuit résonant LLC est connectée au côté secondaire du transformateur haute fréquence (2), et une extrémité de sortie du circuit résonant LLC est connectée à l'extrémité d'entrée du redresseur (3).

6. Dispositif de renvoi d'énergie selon la revendication 5, dans lequel l'onduleur triphasé (4) est un onduleur triphasé à trois niveaux.

7. Système d'alimentation électrique de traction, comprenant le dispositif de renvoi d'énergie d'un système d'alimentation électrique de traction selon l'une quelconque des revendications 1 à 6.
